Europäisches Patentamt

(19) European Patent Office

Office européen des brevets

(11) Veröffentlichungsnummer: **0 284 836**
**B1**

# EUROPÄISCHE PATENTSCHRIFT

(45) Veröffentlichungstag der Patentschrift:
04.07.90

(51) Int. Cl.⁵: **B64F 1/22**

(21) Anmeldenummer: **88103582.8**

(22) Anmeldetag: **08.03.88**

(54) **Rangierfahrzeug zum Manövrieren von Flugzeugen am Boden.**

(30) Priorität: **27.03.87 DE 3710045**

(43) Veröffentlichungstag der Anmeldung:
**05.10.88 Patentblatt 88/40**

(45) Bekanntmachung des Hinweises auf die Patenterteilung:
**04.07.90 Patentblatt 90/27**

(84) Benannte Vertragsstaaten:
**AT BE CH ES FR GB IT LI NL SE**

(56) Entgegenhaltungen:
**DE-A- 2 812 434**
**US-A- 4 036 384**

(73) Patentinhaber: **Krauss-Maffei Aktiengesellschaft,**
**Krauss-Maffei-Strasse 2, D-8000 München 50(DE)**

(72) Erfinder: **Pollner, Jürgen, Dipl.-Ing. (FH),**
**Fritz-Reuter-Strasse 36, D-8000 München 60(DE)**
Erfinder: **Trummer, Gregor, Dipl.-Ing. (FH), Alpenblick 5,**
**D-8134 Aschering(DE)**
Erfinder: **Mölzer, Peter, Dipl.-Ing., Geranienweg 7,**
**D-8061 Schwabhausen(DE)**

## Beschreibung

Die Erfindung bezieht sich auf ein Rangierfahrzeug zum Manövrieren von Flugzeugen am Boden gemäß dem Oberbegriff des Patentanspruchs 1.

Ein bekanntes Fahrzeug dieser Art ist in der DE-OS 2 812 434 beschrieben. Es handelt sich um eine Zugmaschine die ausschließlich zum Bewegen von Großraumflugzeugen dient. Sie ist insbesondere für das schnelle Schleppen von leeren Großraumflugzeugen über große Entfernungen vorgesehen. Die Bugräder werden nach dem Auffahren auf die Rampe und Hochschwenken derselben auf der hinteren Plattform des Fahrzeuges mittels einer Stützplatte drehbar gelagert und dort durch eine feste sowie zwei bewegliche Platten arretiert. Diese Lagerung und Arretierung der Bugräder ist aufwendig und bietet bei bestimmten Flugzeugtypen keinen ausreichenden Schutz gegen das sogenannte Aussteigen des Bugfahrwerks nach oben, was z.B. zu einem Abkippen des Hecks führen kann. Zum anderen Können mit einer derartigen Vorrichtung keine Bugfahrwerke mit Steinabweisern, die sich im unteren Bereich der Bugräder befinden, arretiert werden, da der für solche Steinabweiser in Frage kommende Raum nicht zur Verfügung steht. Dieser Raum ist nämlich für eine schwenkbar gelagerte hintere Platte vorgesehen, welche mittels Druckzylindern gegen die Bugräder gezogen wird.

Das oben beschriebene Fahrzeug ist für die vielfältigen Anforderungen, die an Rangierfahrzeuge zum Manövrieren von Flugzeugen am Boden gestellt werden, nicht geeignet und zudem für kleinere Flugzeuge unwirtschaftlich. Es ist außerdem nur für Bugräder mit einem eng begrenzten Durchmesserbereich geeignet.

Ein Schleppfahrzeug, welches insbesondere für kleine Flugzeuge vorgesehen ist und manuell betätigt und geführt werden kann, ist in der US-A 4 036 384 beschrieben. Hierbei wird das Bugrad im unteren Bereich auf einer Plattform zwischen zwei zwangsverbundenen Platten aufgenommen, wobei es ohne Einspannung gelagert ist. Das Bugrad ist damit nicht gegen ein Aussteigen nach oben gesichert, zumal auch ein Niederhalter fehlt. Aufgrund der Anordnung der Platten können ebenfalls keine Bugräder mit Steinabweisern aufgenommen werden. Die Vorrichtung ist im übrigen auch nur für einen bestimmten Bugraddurchmesser geeignet.

Der Erfindung liegt die Aufgabe zugrunde, ein Rangierfahrzeug zum sicheren Transport von beliebig beladenen Flugzeugen am Boden mit einem Bugfahrwerks-Aufnahmesystem zu schaffen, welches auch bei einem großen Bereich von Bugraddurchmessern bzw. Flugzeugtypen das Aussteigen des Bugfahrwerks nach oben bzw. das Abkippen des Hecks verhindert und das mit Steinabweisern versehene Bugfahrwerke aufnehmen kann.

Diese Aufgabe wird gemäß den Merkmalen des Patentanspruchs 1 gelöst.

Durch die erfindungsgemäße Anordnung der Nocken werden diese in hochgeschwenkter Endstellung der Rampe so gegen die Bugräder gedrückt, daß sie gemeinsam mit den weiteren festen und beweglichen Elementen der Arretiervorrichtung ein Ausweichen der Bugräder insbesondere nach oben und nach hinten verhindern, indem die Bugräder an mehreren Stellen zangenförmig umklammert werden.

Die erfindungsgemäße Anordnung ermöglicht die Aufnahme von Bugfahrwerken mit Steinabweisern in einem großen Durchmesserbereich, da für die Steinabweiser genügend Platz vorhanden ist.

In vorteilhafter Ausbildung der Erfindung sind die Nocken in Abhängigkeit von der Schwenkbewegung der Rampe selbsttätig ausklappbar und arretierbar angeordnet. Hierbei werden die Nocken durch eine gemeinsame Welle betätigt, wobei an einem oder an beiden Enden dieser Welle ein drehelastisch befestigter Hebel mit einer Rolle oder einem Gleitstück in außen im Rahmen angebrachten Kulissen geführt ist. Die Führungsnut der Kulissen besteht aus je einem senkrechten, einem geradlinigschrägen und einem kreisbogenförmig verlaufenden Teil. Hierbei wird durch den senkrecht verlaufenden Teil der Führungsnut in Verbindumg mit einer Vorspannung der drehelastisch befestigten Nebel erreicht, daß die Nocken beim Auffahren der Bugräder auf die Rampe nicht aus dieser ausklappen können, sondern vielmehr eine klapperfreie Lage der Nocken in der Rampe während des Auffahrvorganges gewährleistet ist.

Desweiteren wird durch diese Anordnung bewirkt, daß Bautoleranzen, Reifenabnutzung etc. und durch Bugfahrwerksbelastung hervorgerufene Verformungen kompensiert werden. Der geradlinigschräg verlaufende Teil der Führungsnut bewirkt ein rasches und rechtzeitiges Ausklappen der Nocken während des Hochschwenkens der Rampe, wobei die beiden Nockenkniehebel bei vollständig ausgeklappten Nocken, d.h. bei hochgeschwenkter Rampe, durch eine über die Strecklage hinausgehende stabile Lage arretiert werden. Diese Lage verhindert ein Einklappen der Nocken und somit einen Klemmverlust bei äußeren, vom Bugfahrwerk vertikal nach unten gerichteten Kräften. Der kreisbogenförmig verlaufende Teil der Führungsnut schließlich ermöglicht ein stufenloses Anpassen der Nocken an unterschiedlich große Bugräder im Bereich vom größten bis zum kleinsten Raddurchmesser, wobei im gesamten Durchmesserbereich von der größten bis zur kleinsten Bugradgröße die stabile Nockenlage unabhängig vom Schwenkwinkel der Rampe erhalten bleibt.

In vorteilhafter Ausbildung der Erfindung wird die Rampe durch eine Kolbenstange einer Kolben-Zylinder-Einheit über ein Rampenkniehebelsystem betätigt. Dieses Kniehebelsystem ist so ausgebildet, daß in ausgeschenkter Endstellung der Rampe beide Kniehebel in Strecklage sind und in hochgeschwenkter Endstellung im spitzen Winkel zueinander stehen. Durch die erfindungsgemäße günstige kinematische Hebelanordnung kann einerseits die Zylinderzugkraft in der Ausgangslage, d.h. wenn die volle Bugradlast auf der Rampe steht, gering gehalten werden. Andererseits ermöglicht sie bei kleinem Zylinderhub eine rasche Schwenkbewegung der Rampe bis zum Anschlag der Nocken an den Bugrädern, wobei die Nocken als Klemmbacken die Bugräder mit definierter Kraft andrücken und festhalten.

Die Rollenwand ist vorteilhaft mit einer oder mehreren Kontaktleisten oder Endschaltern versehen. Diese signalisieren dem Fahrer das Ende des Einrollvorganges, wonach er das Einfahren beendet und den Verzurrvorgang startet.

In vorteilhafter Ausbildung der Erfindung ist die Rampe mit einem oder mehreren Abstandsfühlern, vorzugsweise Abtastrollenhebeln, versehen. In Verbindung mit einem Regelsystem wird hierdurch erreicht, daß die Rampe unter allen denkbaren Belastungszuständen beim Aufnahme- und Absetzvorgang stets einen konstanten Abstand zum Boden einhält bzw. einen bestimmten Abstandsgrenzwert zum Boden nicht unterschreitet. Der erforderliche Regelweg ist dabei im senkrecht verlaufenden Teil der Führungsnut der Kulissenführung enthalten. Durch die drehelastische Befestigung der in der Kulisse geführten Hebel an der Welle sind die Nocken innerhalb des Regelweges klapperfrei in der Rampe gelagert und können in diesem Bereich auch nicht aus der Rampe ausklappen; d.h. die Oberseite der Nocken liegt, unabhängig von Abstandskorrekturen, während des gesamten Auffahrvorganges mit der Oberseite der Rampe in ein und derselben Ebene.

Ein Ausführungsbeispiel der Erfindung ist in der Zeichnung dargestellt.

Es zeigen:

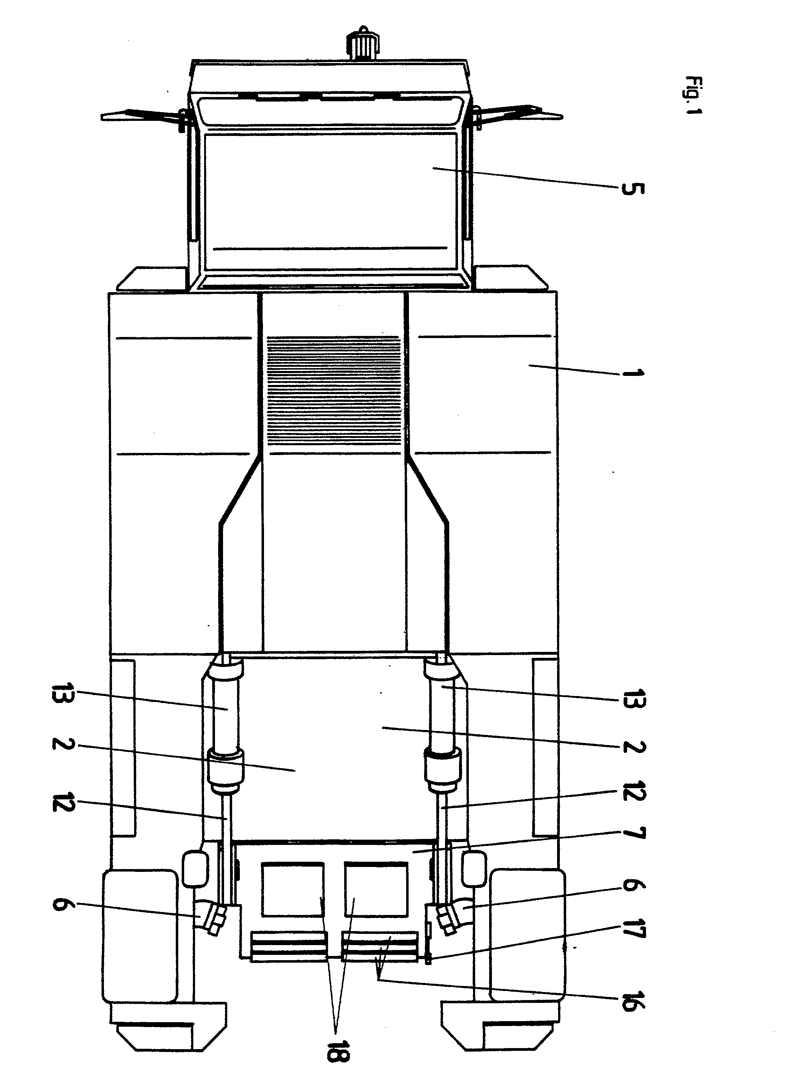

Fig. 1 ein Rangierfahrzeug mit einer Auffahrvorrichtung in ausgeschwenkter Endstellung der Rampe in Draufsicht,

Fig. 2 das Rangierfahrzeug gemäß Fig. 1 in einer Seitenansicht, wobei zusätzlich Teile der Arretiervorrichtung mit angedeuteter Position des Bugrades dargestellt sind,

Fig. 3 eine schematische, vergrößerte Darstellung eines Nockens in eingeklappter Lage in der Rampe mit einem Hebelsystem zum selbsttätigen Ausklappen und Arretieren und

Fig. 4 das Rangierfahrzeug gemäß Fig. 2, jedoch in hochgeschwenkter Endstellung der Rampe und arretiertem Bugrad.

Das Rangierfahrzeug besteht im wesentlichen aus einem offenen Rahmen 1, der bis knapp vor die Hinterachse durch eine Bodenplatte 2 verbunden ist, mit zwei Vorderrädern 3 und zwei Hinterrädern 4 sowie einem mit dem Rahmen 1 verbundenen Fahrerhaus 5. Alle vier Räder werden mittels eines hydrostatischen Antriebs über Hydromotoren 6 angetrieben. Die Hydromotoren 6 werden ihrerseits über eine nicht dargestellte Ringleitung mit einer Druckversorgung betrieben.

An die Bodenplatte 2 ist beidseitig eine Rampe 7 mittels Zapfen 8 angelenkt. Die Rampe 7 ist beidseitig mittels je eines in Zapfen 9 gelagerten Hebels 10 über je ein Drehgelenk 11 an je eine Kolbenstange 12 einer Kolben-Zylinder-Einheit 13 angelenkt. Die Kolben-Zylinder-Einheiten 13 sind im Rahmen 1 schwenkbar. Im Gelenk 11 ist je ein weiterer Hebel 14 jeweils an die Kolbenstange 12 angelenkt. An seinem anderen Ende sind die Hebel 14 jeweils an ortsfest im Rahmen 1 angeordneten Zapfen drehbar gelagert. Die Hebel 10 und 14 wirken somit als Kniehebel auf die Rampe 7, betätigbar durch die Kolben-Zylinder-Einheiten 13.

Im freien Ende der Rampe 7 sind jeweils drei Rollen 16 drehbar gelagert, wobei die äußeren Rollen einen kleineren Durchmesser als die beiden inneren haben, um die Längslasten auf die Bugfahrwerke klein zu halten. An der Rampe 7 ist ferner ein Abtastrollenhebel 17 installiert.

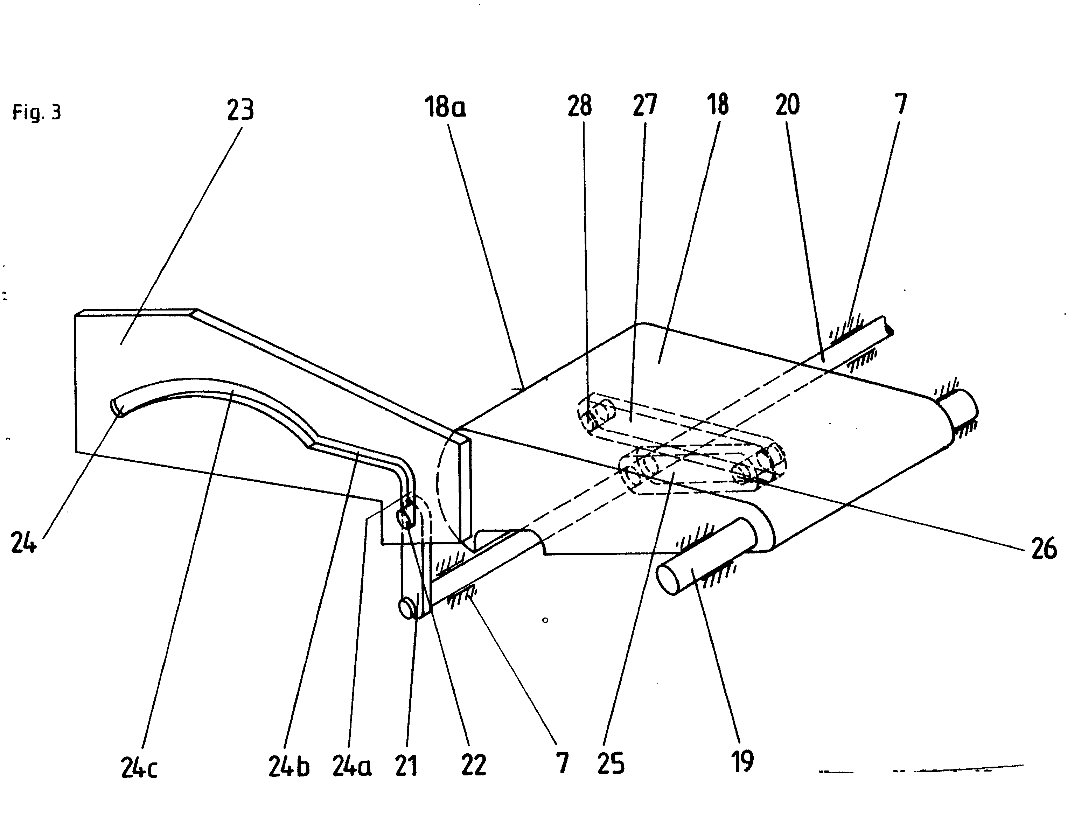

Schließlich sind in der Rampe 7 zwei Nocken 18 um eine Drehachse 19 schwenkbar gelagert. Wie insbesondere aus Fig. 3 ersichtlich, ist in der Rampe 7 eine Welle 20 gelagert, an deren beiden Enden je ein Hebel 21 drehelastisch befestigt ist, der an seinem freien Ende je eine Rolle 22 trägt, die in je einer am Rahmen 1 angeordneten Kulisse 23 geführt ist. Die Kulisse 23 weist je eine Führungsnut 24 mit einem senkrechten (24a), einem geradlinig-schrägen (24b) und einem kreisbogenförmigen (24c) Teil auf. An der Welle 20 ist je ein Kniehebel 25 befestigt. Er ist an seinem freien Ende über je ein Gelenk mit je einem weiteren Kniehebel 27 verbunden, der mittels Zapfen 28 an je einem Nocken 18 angelenkt ist. Die Nocken 18 sind mit Aussparungen 18a versehen, damit ausreichend freier Raum für die Welle 20 vorhanden ist und diese somit nicht das Einklappen der Nocken 18 in die Rampe 7 behindern kann.

Mit dem vorderen Teil der Bodenplatte 2 ist eine senkrechte Wand 29 als Widerlager für die Bugräder 30 fest verbunden. Die Wand 29 ist mit Rollen 31 sowie mit nicht dargestellten Kontaktleisten bzw. Endschaltern versehen. Auf der Bodenplatte 2 ist ferner je ein Spannzylinder 32 angeordnet, der an je einen Hebel 33 angelenkt ist. Die Hebel 33 sind jeweils mit einer Rollenschaufel 34 zum leichteren Aufklettern, insbesondere bei Bugrädern größeren Durchmessers und zur Schonung der Bugradreifen durch Vermeidung von Kantenpressungen, versehen. Am anderen Ende der Hebel 33 ist je ein weiterer Hebel 35 angelenkt, der in festen Zapfen 36 im Rahmen 1 schwenkbar gelagert ist.

Auf dem vorderen Teil der Bodenplatte 2 ist eine Seilwinde 37 angeordnet.

Die Wirkungsweise der vorbeschriebenen Anordnung ergibt sich wie folgt.

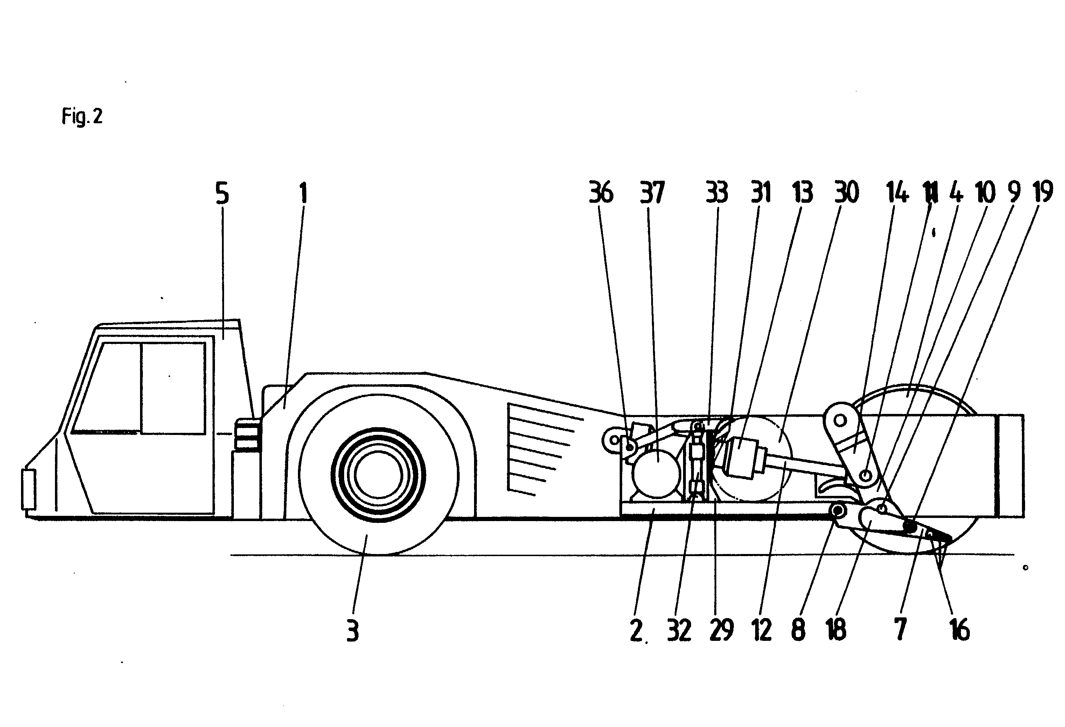

Der Fahrer nähert das Rangierfahrzeug mit dem Heck voraus, parallel zur Längsachse des Flugzeugs, dem Bugfahrwerk an. Dabei befindet sich die Rampe 7 in ausgeschwenkter Endstellung bzw. in abgesenkter Position (s. Fig. 2). Die Nocken 18 schließen hierbei bündig mit der Auffahrfläche der Rampe 7 ab. Mit kleiner Geschwindigkeit wird nun die Rampe 7 mit den Rollen 16 unter die Bugräder 30 gedrückt, wobei dieselben ab einer bestimmten Längskraft selbsttätig auf die Rampe aufklettern. Durch den Abtastrollenhebel 17 in Verbindung mit einem nicht dargestellten Regelsystem wird dabei sichergestellt, daß die Rampe 7 einen konstanten Abstand zum Boden einhält. Der erforderliche Regelweg ist im senkrecht verlaufenden Teil 24a der Kulisse 23 enthalten. Beim weiteren Einfahren rollen die Bugräder 30 über die schiefe Ebene der Rampe 7 auf die Bodenplatte 2 innerhalb des Rahmens 1, bis sie auf die Kontaktleisten oder Endschalter der senkrechten Wand 29 treffen. Die mit einer definierten Vorspannung versehenen Hebel 33 mit den Rollenschaufeln 34 legen sich beim Annähern der Bugräder 30 passiv an die Bugradreifen an und klettern je nach Reifendurchmesser entsprechend hoch auf. Die Kontaktleisten bzw. Endschalter signalisieren dem Fahrer das Ende des Einrollvorgangs, wonach er das Einfahren beendet und den Verzurrvorgang beginnt. Das Verzurren der Bugräder 30 erfolgt im wesentlichen mit vier Elementen, die in der Endposition die Bugräder an vier Stellen zangenförmig umklammern. An der Umklammerung sind die Bodenplatte 2 und die senkrechte Wand 29 mit den Rollen 31 passiv wirkend beteiligt, aktiv wirkend dagegen die Hebel 33 mit den Rollenschaufeln 34 sowie die ausklappbaren Nocken 18. Die Verzurrung wird durch Betätigen der Kolben-Zylinder-Einheiten 13 eingeleitet, wodurch die Kolbenstange 12 und über das Drehgelenk 11 die Hebel 10 und 14 nach vorn gezogen werden. Hierdurch wird die Rampe 7 mit den Nocken 18 um eine durch die Zapfen 8 gebildete Drehachse hochgeschwenkt, wodurch die Nocken 18 selbsttätig aus ihrer Ausgangslage (s. Fig. 3) in der Rampe 7 wie folgt herausklappen. Durch das Hochschwenken der Rampe 7 werden die Rollen 22 beidseitig aus ihrer Ausgangslage in der Führungsnut 24 herausgeführt. Dabei wird über den Hebel 21 ein Drehmoment auf die Welle 20 übertragen. Dieses Drehmoment wird über die fest mit der Welle 20 verbundenen Hebel 25 übertragen, der die mit ihnen gelenkig verbundenen und mittels Zapfen 28 an den Nocken angelenkten Hebel betätigt. Hierdurch werden die Nocken um ihre Drehachse 19 verschwenkt. Die Kulissenführung 24 ist so gestaltet, daß deren senkrechter Teil 24a in Verbindung mit einer Vorspannung des Hebels 21 für einen klapperfreien Sitz der Nocken 18 in der Rampe 7 sorgt. Der schräg aufwärts verlaufende Teil 24b bewirkt ein rasches Ausklappen der Nocken in eine stabile, knicksichere Lage, während der folgende kreisbogenförmige Teil 24c ein Anpassen der Nocken 18 an unterschiedliche Bugraddurchmesser, und zwar vom größten bis zum kleinsten Durchmesser entsprechend dem Verlauf des Kreisbogens ermöglicht.

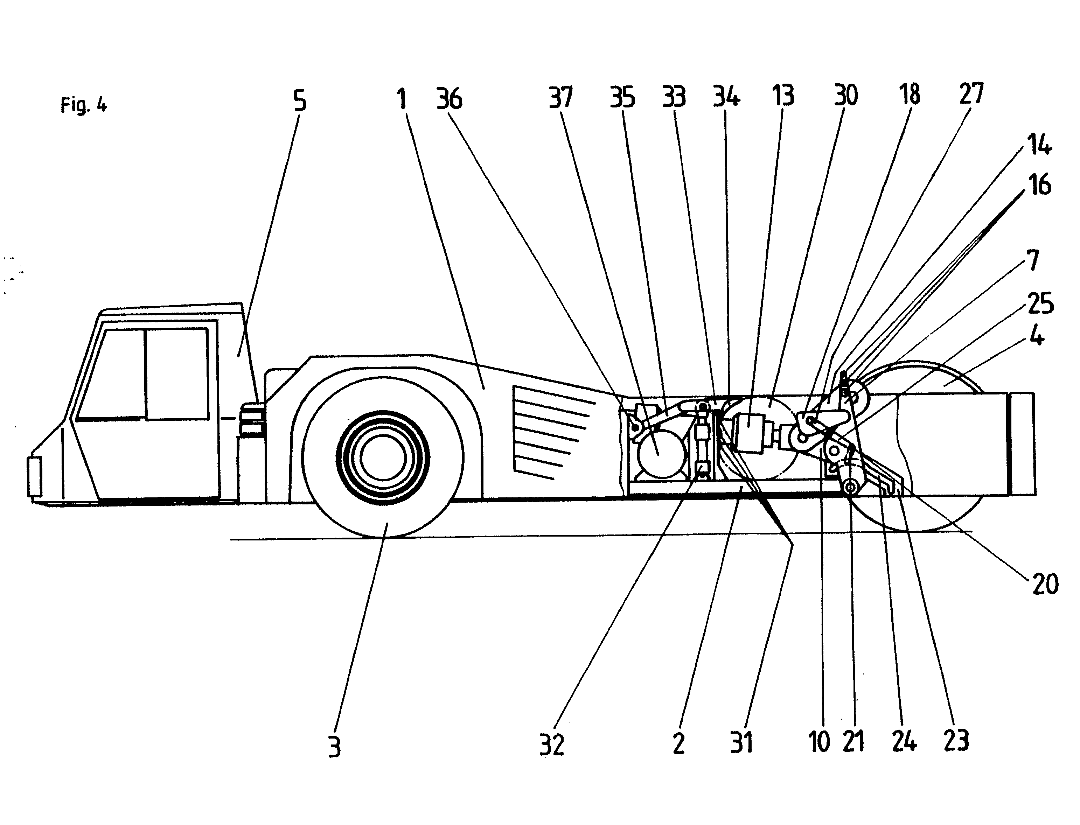

Die definierte Andrückkraft der Nocken 18 wird durch die Kolben-Zylinder-Einheiten 13 in Verbindung mit der Kniehebelanordnung der Hebel 10 und 14 erzeugt. Wie aus Fig. 4 ersichtlich, sind bei an den Bugräder 30 anliegenden Nocken 18 die Hebel 25 und 27 in einer über die Strecklage hinausgehenden stabilen Lage, die ein Einklappen der Nocken 18 und damit einen Klemmverlust bei äußeren, vom Bugfahrwerk vertikal nach unten wirkenden, Kräften verhindert. Die stabile Lage der Nocken 18 in der Klemmposition als auch deren klapperfreie Lage in der Rampe 7 in Auffahrposition werden durch die Vorspannrichtung der drehelastischen Befestigung des Hebels 21 in Verbindung mit der Kulissenführung 24 erreicht.

Gleichzeitig mit der Anlage der Nocken 18 werden die Hebel 33 mit den Rollenschaufeln 34 mittels der Spannzylinder 32 mit definierter Kraft auf die Bugradreifen gedrückt.

Danach ist das Rangierfahrzeug zum Schleppen des Flugzeugs fahrbereit. Nach beendetem Schleppvorgang erfolgt das Entkoppeln und das Abrollen der Bugräder in umgekehrter Reihenfolge des vorbeschriebenen Aufrollvorgangs.

## Patentansprüche

1. Rangierfahrzeug zum Manövrieren von Flugzeugen am Boden, dessen Fahrgestell eine Plattform mit einer Auffahr- und Arretierungsvorrichtung zur Aufnahme und Arretierung des Bugfahrwerks aufweist, um das Flugzeug vor dem Manövrieren am Bugfahrwerk anzuheben und mit dem Rangierfahrzeug zu koppeln, wobei die Auffahrvorrichtung im wesentlichen aus einer an der Plattform angelenkten schwenkbaren Rampe sowie einer Hubvorrichtung mit einer Kolben-Zylinder-Einheit zum Verschwenken der Rampe besteht, und die Arretiervorrichtung aus festen und beweglichen Elementen besteht, welche das Bugfahrwerk auf dem Rangierfahrzeug festhalten, dadurch gekennzeichnet, daß die schwenkbare Rampe (7) mit einem oder mehreren beweglichen Nocken (18) versehen ist, die in Auffahrstellung der Rampe (7) mit deren Auffahrfläche eine Ebene bilden und die in hochgeschwenkter Endstellung der Rampe (7) aus dieser ausklappbar und gegen die Bugräder (30) mittels der zum Verschwenken der Rampe dienenden Kolben-Zylinder-Einheit (13) mit einer definierten Kraft andrückbar und in dieser Stellung arretierbar sind, und daß gegenüber den Nocken (18) oberhalb der Bugradachsenhöhe als Niederhalter dienende Hebel (33) und eine annähernd vertikale Wand (29) als Anlage für die Bugräder (30) vorgesehen sind.

2. Rangierfahrzeug nach Anspruch 1, dadurch gekennzeichnet, daß die Nocken (18) an ihrer der Klemmfläche (18a) entgegengesetzten Seite um eine quer zur Rampe (7) verlaufende Drehachse (19) schwenkbar angeordnet sind und daß innerhalb der Rampe (7) eine Welle (20) gelagert ist, an deren einem oder beiden Enden je ein Hebel (21) drehelastisch befestigt ist, der an seinem freien Ende je eine Rolle (22) oder ein Gleitstück trägt, die in je einer am Rahmen (1) des Rangierfahrzeugs angeordneten Kulisse (23) geführt sind, und daß an der Welle (20) je ein Hebel (25) befestigt ist, der an seinem freien Ende über je ein Gelenk (26) mit je einem weiteren Hebel (27) gelenkig verbunden ist, der mittels Zapfen (28) an je einem Nocken (18) im Bereich der Klemmfläche (18a) angelenkt ist, derart, daß durch Hochschwenken der Rampe (7) die Nocken (18) aus der Rampe (7) herausschwenkbar und die beiden Hebel (25, 27) in der hochgeschwenkten Endstellung der Rampe (7) in einer über die Strecklage hinausgehende stabile Lage arretierbar und auf Druckkräfte belastbar sind und daß die Kulisse (23) je eine Führungsnut (24) mit einem senkrechten Teil (24a), einem geradlinigschrägen Teil (24b) und einem kreisbogenförmigen Teil (24c) aufweisen.

3. Rangierfahrzeug nach Ansprüche 1 oder 2, dadurch gekennzeichnet, daß die Rampe (7) beidseitig an je eine Kolbenstange (12) einer Kolben-Zylinder-Einheit mittels je eines Nebels (10) angelenkt und in dem so gebildeten Drehgelenk (11) ein weiterer Hebel (14) angelenkt ist, der an seinem anderen Ende drehbar im Rahmen (1) gelagert ist, derart, daß in Auffahrstellung der Rampe (7) die Hebel (10, 14) als Kniehebel in Strecklage sind und in hochgeschwenkter Endstellung der Rampe (7) im spitzen Winkel zueinander stehen.

4. Rangierfahrzeug nach Anspruch 1, dadurch gekennzeichnet, daß die Hebel (33) mittels Spannzylindern (32) mit Rollenschaufeln (34) von oben her gegen die Bugräder andrückbar sind.

5. Rangierfahrzeug nach Anspruch 1, dadurch gekennzeichnet, daß an der Wand (29) Kontaktleisten oder Endschalter zum Signalisieren des beendeten Einrollvorganges der Bugräder (30) vorgesehen sind.

6. Rangierfahrzeug nach einem der Ansprüche 1 bis 3, dadurch gekennzeichnet, daß die Rampe (7) mit einem oder mehreren Abstandsfühlern, vorzugsweise Abtastrollenhebeln (17), versehen ist.

**Revendications**

1. Véhicule de manutention destiné à manœuvrer les avions au sol, véhicule dont le châssis comporte une plateforme à dispositifs de chargement et d'immobilisation destinés à recevoir et immobiliser le train auxiliaire avant d'atterrissage, afin de soulever l'avion par ce train auxiliaire avant d'atterrissage et de relier l'avion au véhicule avant de manœuvre cet avion, le dispositif de chargement étant composé essentiellement d'une rampe pivotante articulée sur la plate-forme ainsi que d'un mécanisme de levage à vérins, destiné à faire pivoter cette rampe, et le dispositif d'immobilisation étant composé d'éléments fixes et mobiles, qui maintiennent le train d'atterrissage sur le véhicule, lequel est caractérisé en ce que la rampe (7) pivotante est équipée d'une ou plusieurs cales (18) mobiles, qui, dans la position de chargement de cette rampe (7), sont dans le plan de la surface de chargement de celle-ci et qui, lorsque cette rampe (7) est complètement relevée, peuvent s'en écarter et être appliquées avec une force déterminée contre les roules (30) du train auxiliaire avant d'atterrissage, au moyen des vérins (13) qui servent à faire pivoter la rampe, et être immobilisées dans cette position; et en ce qu'il est prévu vis-à-vis des cales (18) un levier (33) disposé plus haut que l'axe des roues avant d'atterrissage et servant d'organe abaisseur ainsi qu'une paroi (29) sensiblement verticale constituant un contre-appui pour ces roues (30).

2. Véhicule de manutention selon la revendication 1, caractérisé en ce que, du côté opposé à leur surface (18a) de serrage, les cales (18) peuvent tourner sur un axe (19) de rotation, perpendiculaire à la rampe (7) ; en ce qu'il est monté dans cette rampe (7) un arbre (20), à l'une ou aux deux extrémités duquel est fixé élastiquement un levier (21) respectif portant à son extrémité libre un galet (22) ou un coulisseau, qui est logé dans une coulisse (23) montée sur le châssis (1) du véhicule; en ce qu'un levier (25) respectif, fixé à l'arbre (20), est, à son autre extrémité, relié par une articulation (26) à un autre levier (27), lequel est articulé au moyen de pivots (28) sur une cale (18) respective près de la surface (18a) de serrage de cette dernière, de manière que les cales (18) se soulèvent de la rampe (7) lorsque celles-ci est relevée et que, dans la position relevée de cette rampe (7), les deux leviers (25, 27) soient immobilisés dans une position stable, audelà de la position dans laquelle ils sont dans le prolongement l'un de l'autre, et puissent être soumis à des contraintes de compression ; et en ce que chacune des coulisses (23) comporte une rainure (24) de guidage, présentant une partie verticale (24a), une partie oblique rectiligne (24b) et une partie en arc de cercle (24c).

3. Véhicule de manutention selon les revendications 1 ou 2, caractérisé en ce que la rampe (7) est articulée des deux côtés au moyen d'un levier (10) respectif à la tige (12) du piston d'un vérin et en ce qu'à l'articulation pivotante (11) ainsi formée est relié un autre levier (14), dont l'autre extrémité peut pivoter sur le châssis (1), de manière que, lorsque cette rampe (7) occupe sa position de chargement, ces leviers (10, 14) formant une genouillère soient dans le prolongement l'un de l'autre et que, lorsque la rampe (7) est complètement relevée, ils forment entre eux un angle aigu.

4. Véhicule de manutention selon la revendication 1, caractérisé en ce que des palettes (34) portant des rouleaux, des leviers (33), peuvent être appliquées de haut en bas au moyen de vérins (32) de serrage contre les roues (30) avant d'atterrissage.

5. Véhicule de manutention selon la revendication 1, caractérisé en ce que des barrettes de contact ou des interrupteurs de fin de course, destinés à signaler la fin de la phase de roulage des roues (30) auxiliaire avant du train d'atterrissage sont montés sur la paroi (29).

6. Véhicule de manutention selon l'une des revendications 1 à 3, caractérisé en ce que la rampe (7) est équipée d'un ou plusieurs détecteurs d'écartement, avantageusement de leviers (17) à galets palpeurs.

**Claims**

1. A shunting vehicle for manoeuvring aeroplanes on the ground, of which the chassis has a platform with a drive-on and arresting device for picking up and arresting the nose landing gear in order to lift the aeroplane prior to manoeuvring at the nose landing gear and to couple it to the shunting vehicle, wherein the drive-on device consists essentially of a pivotal ramp attached to the platform and a lifting device with a piston/cylinder unit for pivoting the ramp, and the arresting device consists of stationary and moving elements which secure the nose landing gear on the shunting vehicle, characterised in that the pivotal ramp (7) is provided with one or more moving cams (18) which, in the drive-on position of the ramp (7), form a plane with the drive-on face thereof and, in the raised end position of the ramp (7), can be swung out from it and pressed with a defined force against the nose wheels (30) by means of the piston/ cylinder unit (13) used for pivoting the ramp and can be arrested in this position, and in that levers (33) serving as holding-down means and a substantiall vertical wall (29) as support for the nose wheels (30) are provided opposite the cams (18) above the level of the nose wheel axle.

2. A shunting vehicle according to claim 1, characterised in that the cams (18) are arranged pivotally about a pivot pin (19) extending transversely to the ramp (7) on their side remote from the clamping face (18a) and in that, inside the ramp (7), there is mounted a shaft (20) at one or both of whose ends there is rotatably fixed a respective lever (21) carrying, at its free end, a respective roller (22) or a sliding piece which are guided in a respective connecting member (23) arranged on the chassis (I) of the shunting vehicle, and in that, on the shaft (20), there is a fixed a respective lever (25) which is articulated at its free end via a respective joint (26) to a further respective lever (27) which is attached by means of pins (28) to a respective cam (18) in the region of the clamping face (18a) in such a way that the cams (18) can be pivoted out of the ramp (7) by pivoting up the ramp (7) and the two levers (25, 27) can be arrested in the raised end position of the ramp (7) in a stable position extending beyond the stretched position and can be loaded with pressing forces and in that the connecting member (23) has a respective guide groove (24) with a vertical part (24a), a straight oblique part (24b) and an arc-shaped part (24c).

3. A shunting vehicle according to claim 1 or 2, characterised in that the ramp (7) is attached at either end to a respective piston rod (12) of a piston/cylinder unit by means of a respective lever (10) and, in the hinge (11) thus formed, there is articulated a further lever (14) which is rotatably mounted at its other end in the chassis (1) in such a way that, in the drive-on position of the ramp (7), the levers (10, 14) are in their stretched position as toggle levers and, in the raised end position of the ramp (7), are at an acute angle to one another.

4. A shunting vehicle according to claim 1, characterised in that the levers (33) can be pressed against the nose wheels from above by means of clamping cylinders (32) with roller blades (34).

5. A shunting vehicle according to claim 1, characterised in that contact strips or limit switches are provided on the wall (29) to signal completion of the rolling-in process of the nose wheels (30).

6. A shunting vehicle according to one of claims 1 to 3, characterised in that the ramp (7) is provided with one or more distance sensors, preferably scanning roller levers (17).

Fig. 1

Fig.2

Fig. 3

EP 0 284 836 B1

Fig. 4